(19) Europäisches Patentamt / European Patent Office / Office européen des brevets

(11) **EP 3 971 019 B1**

(12) **EUROPEAN PATENT SPECIFICATION**

(45) Date of publication and mention
of the grant of the patent:
**28.06.2023 Bulletin 2023/26**

(21) Application number: **20867467.1**

(22) Date of filing: **23.09.2020**

(51) International Patent Classification (IPC):
**B60L 1/00** *(2006.01)*       **B60L 53/22** *(2019.01)*
**B60L 58/20** *(2019.01)*       **H02M 1/38** *(2007.01)*
**H02M 1/42** *(2007.01)*       **H02M 3/00** *(2006.01)*
**H02M 7/5387** *(2007.01)*      **H02J 1/08** *(2006.01)*
**H02M 3/335** *(2006.01)*       **H02J 7/00** *(2006.01)*
**H02J 50/10** *(2016.01)*       **H02J 50/40** *(2016.01)*

(52) Cooperative Patent Classification (CPC):
**H02J 50/402; B60L 1/00; B60L 53/22; B60L 58/20;
H02J 1/082; H02J 7/00047; H02J 50/10;
H02M 3/01; H02M 3/33561; H02M 3/33573;
H02M 3/33592; H02M 7/53878; B60L 2210/10;
B60L 2210/14; B60L 2210/30;**          (Cont.)

(86) International application number:
**PCT/CN2020/117070**

(87) International publication number:
**WO 2021/057780 (01.04.2021 Gazette 2021/13)**

(54) **CHARGING CIRCUIT HAVING TWO OUTPUT PORTS**

LADESCHALTUNG MIT ZWEI AUSGANGSANSCHLÜSSEN

CIRCUIT DE CHARGE AVEC DEUX PORTS DE SORTIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2019 CN 201910899755
09.03.2020 CN 202010158651**

(43) Date of publication of application:
**23.03.2022 Bulletin 2022/12**

(73) Proprietor: **Huawei Digital Power Technologies
Co., Ltd.
Shenzhen, Guangdong 518043 (CN)**

(72) Inventors:
• **WANG, Tianyu
Shenzhen, Guangdong 518129 (CN)**
• **LIU, Ren
Shenzhen, Guangdong 518129 (CN)**
• **CUI, Zhaoxue
Shenzhen, Guangdong 518129 (CN)**

• **ZHANG, Wei
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**EP-A1- 3 533 669       CN-A- 1 489 272
CN-A- 107 623 365      CN-A- 107 623 365
CN-A- 107 623 365      CN-A- 109 038 736
CN-A- 109 703 399      CN-A- 110 774 909
CN-A- 111 251 916      CN-C- 1 315 251
US-A1- 2008 198 632**

(52) Cooperative Patent Classification (CPC): (Cont.)
H02J 2310/48; H02M 1/325; H02M 1/38;
H02M 1/4208; Y02T 10/70; Y02T 10/7072;
Y02T 10/72; Y02T 90/12; Y02T 90/14

**Description**

**TECHNICAL FIELD**

This application relates to the circuit field, and in particular, to a dual-output-port charging circuit.

**BACKGROUND**

Climate change, energy, and environment problems are long-term problems faced by the human society. Whether greenhouse gas emission, energy consumption, and tail gas emission problems in the transportation field can be effectively resolved directly affects effective resolution of common problems of human beings. As a major energy-consuming country and an important force for environmental protection in the world, the development of electric vehicles has become China's future development strategy. As the development of electric vehicles is becoming increasingly mature, an on-board charger (On-board Charger, OBC) and a direct current to direct current (direct current-direct current, DC-DC) module are used as important components of the electric vehicle. The OBC can not only convert an alternating-current voltage into a direct-current voltage to charge a battery, but can also convert a direct-current voltage of the battery into an alternating-current voltage to output power, to meet an application scenario such as outdoor and an emergency standby power supply. The DC/DC module is a device that converts a high-voltage battery into a 12 V low-voltage power supply to supply power to a low-voltage device on a vehicle.

Conventional OBC and DC/DC products are usually sold as a two-in-one product (the OBC and a DC/DC circuit are placed in one cabinet). Power circuit topologies of the OBC and DC/DC products are independent of each other. Such products have high costs, and it is also difficult to make a small volume due to a large quantity of power components. To improve the foregoing problems, the industry currently has started to attempt to introduce a three-port converter to integrate the OBC and a DC/DC power circuit into a same circuit conversion system. However, in a current circuit conversion system, there is a problem of relatively serious cross regulation between two output-port voltages.

Further, CN 107 623 365 A refers to a three-port charger with an inversion function including a primary side conversion circuit connected with a primary side winding of a transformer, a secondary side first conversion circuit connected with a second winding of the transformer, a secondary side second conversion circuit connected with a third winding of the transformer and a fourth winding of the transformer, which are connected in series, and a central control unit used for controlling switches in the primary side conversion circuit, the secondary side first conversion circuit and the secondary side second conversion circuit. The primary side conversion circuit is connected with an external power supply, the secondary side first conversion circuit is connected with a high-voltage battery. The secondary side second conversion circuit is connected with a low-voltage load.

Further, CN 1 315 251 C refers to a high frequency inversion bridge, a high frequency chain transformer, a cycle converter, a LC alternating current filter, a DSP kernel control circuit, a MOS tube drive circuit, a detection feedback circuit and an auxiliary power supply.

Further, EP 3 533 669 A1 refers to a dual-output port charging circuit and a control method. The dual-output port charging circuit comprises a primary switching circuit, a secondary first switching circuit, a secondary second switching circuit, a transformer connected to the three circuits, and a controller. The controller receives and samples an output voltage and an output current of the secondary second switching circuit, the output voltage and the output current are compared with a reference value, and a compensation is made, so as to eventually control an on-off time of a switch in the primary switching circuit; and the controller receives and samples an output current of the primary switching circuit, a zero-cross delay is calculated through a zero detection, so as to control an on-off time of a rectification switch in the secondary second switching circuit.

**SUMMARY**

Embodiments of this application provide a dual-output-port charging circuit, and the dual-output-port charging circuit is configured to multiplex a power transistor on a high-voltage side of a DC/DC conversion circuit and a power transistor of a primary-side conversion circuit of an OBC, so that no cross regulation is generated. This problem is solved by the subject matter of the independent claim. Further implementation forms are provided in the dependent claims.

In a first aspect a dual-output-port charging circuit comprising a primary-side conversion circuit, a secondary-side first conversion circuit, a secondary-side second conversion circuit, a transformer, and a controller is provided, wherein:

- the primary-side conversion circuit is an inverter circuit, an alternating current side of the primary-side conversion circuit is coupled to one side of the transformer, the secondary-side first conversion circuit is a rectifier circuit, an alternating current side of the secondary-side first conversion circuit is coupled to another side of the transformer, the secondary-side second conversion circuit is a rectifier circuit, and an alternating current side of the secondary-side second conversion circuit is coupled to still another side of the transformer;

- the primary-side conversion circuit comprises a plurality of first power switches, the secondary-side first conversion circuit comprises a plurality of second power switches, the secondary-side second conversion circuit comprises a first branch circuit, a second branch circuit, a third branch circuit, and a low-voltage output end that are connected in parallel, the first branch circuit comprises a third power switch, a fourth power switch, and a first winding that are connected in series, the third power switch and the fourth power switch are opposite power transistors, the second branch circuit comprises a fifth power switch, a sixth power switch, and a second winding that are connected in series, the fifth power switch and the sixth power switch are opposite power transistors, the third branch circuit comprises a resonant inductor and a resonant capacitor that are connected in series, the low-voltage output end is connected in parallel to the resonant capacitor, and the first winding and the second winding are coupled to the still another side of the transformer; and
- the controller is configured to control each power switch comprised in the dual-output-port charging circuit, to control a first power supply path, a second power supply path, and a third power supply path to output electric energy, the first power supply path comprises the primary-side conversion circuit and the secondary-side first conversion circuit, the second power supply path comprises the primary-side conversion circuit and the secondary-side second conversion circuit, and the third power supply path comprises the secondary-side first conversion circuit and the secondary-side second conversion circuit,

**characterized in that**

- the controller is specifically configured to:

    ◦ control, at a first moment, to switch on the third power switch and the fourth power switch, wherein in a first time period, a voltage on the second winding is a positive voltage, a voltage on the first winding is a negative voltage, the second winding, the resonant inductor, the resonant capacitor, the third power switch, and the fourth power switch form a closed loop, the first moment is a moment in the first time period, and in a second time period, a voltage on the second winding is 0;
    ◦ control, at a second moment, to switch off the third power switch based on a zero-voltage switch, ZVS, and to switch on the fifth power switch based on a small current switching-on method, wherein in a third time period, a voltage on the second winding is a negative voltage, a voltage on the first winding is a positive voltage, and the second moment is an end moment of the third time period; and
    ◦ control, at a third moment, to perform soft switching-off on the fourth power switch based on the zero-voltage switch, ZVS, wherein the third moment is a moment after the second moment, and in a fourth time period, a voltage on the first winding is a positive voltage, and the first winding, the resonant inductor, the resonant capacitor, the fifth power switch, and the sixth power switch form a closed loop.

In the technical solution provided in this embodiment, because the first power supply path and the second power supply path are separately controlled by different phase shift angles, the first power supply path and the second power supply path may separately work independently, so that a power transistor on a high-voltage side of a DC/DC conversion circuit and a power transistor of a primary-side conversion circuit of an OBC, and therefore cross regulation is not generated again. phase shift angle formed by on/off of the first power switches and the second power switches, to control a magnitude of electric energy output by the first power supply path and a current flow direction, and the current flow direction is output from an output end of the secondary-side first conversion circuit.

In a second implementation form of the first aspect the controller is configured to control a magnitude of a phase shift angle formed by on/off of the first power switches and a target power switch, to control a magnitude of electric energy output by the second power supply path and a current flow direction, and the target power switch comprises at least one of the third power switch, the fourth power switch, the fifth power switch, and the sixth power switch.

In a third implementation form of the first aspect the controller is configured to control a magnitude of a phase shift angle formed when a target power switch keeps on, to control the magnitude of the electric energy output by the second power supply path and the current flow direction, the target power switch is the third power switch and the fourth power switch, or the target power switch is the fifth power switch and the sixth power switch, and the current flow direction is output from an output end of the primary-side conversion circuit.

In a fourth implementation form of the first aspect the circuit further comprises an auxiliary inductor, and the auxiliary inductor is connected to a winding on the alternating current side of the secondary-side first conversion circuit, or the auxiliary inductor is connected to a winding on the alternating current side of the primary-side conversion circuit.

In a fifth implementation form of the first aspect, when the auxiliary inductor is connected to the winding on the alternating current side of the secondary-side first conversion circuit, a voltage at a right end point of the auxiliary inductor is less than 0, and the controller is configured to control the magnitude of the phase shift angle formed by on/off of the first power switches and the second power switches, to control the magnitude of the electric energy output by the first power supply path and the current flow direction, wherein the current flow direction is output from the secondary-side first conversion circuit to the output end of the primary-side conversion circuit.

In a sixth implementation form of the first aspect, when the auxiliary inductor is connected to the winding on the alternating current side of the primary -side conversion circuit, a voltage at a left end point of the auxiliary inductor is less than 0, and the controller is configured to control the magnitude of the phase shift angle formed by on/off of the first power switches and the second power switches, to control the magnitude of the electric energy output by the first power supply path and the current flow direction, wherein the current flow direction is output from the secondary-side first conversion circuit to the output end of the primary-side conversion circuit.

In a second aspect the primary-side conversion circuit is a full-bridge circuit or a half-bridge circuit; and the secondary-side first conversion circuit is a full-bridge circuit or a half-bridge circuit.

## BRIEF DESCRIPTION OF DRAWINGS

FIG. 1 is a schematic module diagram of a dual-output-port charging circuit according to an embodiment of this application;

FIG. 2 is a schematic diagram of a first structure of a dual-output-port charging circuit according to an embodiment of this application;

FIG. 3 is a schematic diagram of a second structure of a dual-output-port charging circuit according to an example not forming part of the invention;

FIG. 4 is a diagram of a control time sequence of a primary-side conversion circuit for a secondary-side first conversion circuit and a secondary-side second conversion circuit according to an embodiment of this application;

FIG. 5 is a diagram of a control time sequence of charging the primary-side conversion circuit by the secondary-side second conversion circuit according to an embodiment of this application;

FIG. 6 is a schematic diagram of a third structure of a dual-output-port charging circuit according to an example not forming part of the invention;

FIG. 7 is a diagram of another control time sequence of supplying power to the secondary-side second conversion circuit by the primary-side conversion circuit according to an example not forming part of the invention;

FIG. 8 is a diagram of another control time sequence of supplying power to the primary-side conversion circuit by the secondary-side second conversion circuit according to an example not forming part of the invention;

FIG. 9 is a schematic diagram of a fourth structure of a dual-output-port charging circuit according to an example not forming part of the invention; and

FIG. 10 is a diagram of another control time sequence of forward charging of an OBC according to an example not forming part of the invention.

## DESCRIPTION OF EMBODIMENTS

Embodiments of this application provide a dual-output-port charging circuit, and the dual-output-port charging circuit is configured to multiplex a power transistor on a high-voltage side of a DC/DC conversion circuit and a power transistor of a primary-side conversion circuit of an OBC, so that no cross regulation is generated.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way are interchangeable in proper circumstances so that the embodiments described herein can be implemented in other orders than the order illustrated or described herein. Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

Climate change, energy, and environment problems are long-term problems faced by the human society. Whether greenhouse gas emission, energy consumption, and tail gas emission problems in the transportation field can be effectively resolved directly affects effective resolution of common problems of human beings. As a major energy-consuming country and an important force for environmental protection in the world, the development of electric vehicles has become China's future development strategy. As the development of electric vehicles is becoming increasingly mature, an on-board charger (On-board Charger, OBC) and a direct current to direct current (direct current-direct current, DC-DC) module are used as important components of the electric vehicle. The OBC can not only convert an alternating-current voltage into a direct-current voltage to charge a battery, but can also convert a direct-current voltage of the battery into an alternating-current voltage to output power, to meet an application scenario such as outdoor and an emergency standby power supply. The DC/DC module is a device that converts a high-voltage battery into a 12 V low-voltage power supply to supply power to a low-voltage device on a vehicle.

Conventional OBC and DC/DC products are usually sold as a two-in-one product (the OBC and a DC/DC circuit are placed in one cabinet). Power circuit topologies of the OBC and DC/DC products are independent of each other. Such products have high costs, and it is also difficult to make a small volume due to a large quantity of power components. To improve the foregoing problems, the industry currently has started to attempt to introduce a three-port converter to integrate the OBC and a DC/DC power circuit into a same circuit conversion system. However, in a current circuit conversion system, there is a problem of relatively serious cross regulation between two output-port voltages.

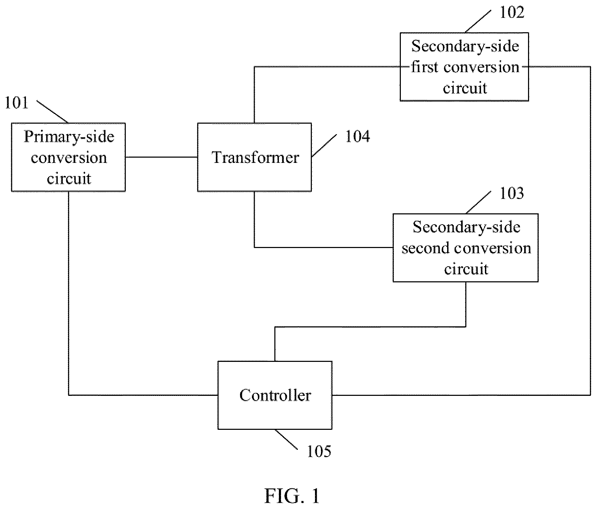

To resolve this problem, an embodiment of this application provides the following dual-output-port charging circuit shown in FIG. 1. The circuit includes a primary-side conversion circuit 101, a secondary-side first conversion circuit 102, a secondary-side second conversion circuit 103, a transformer 104, and a controller 105. The primary-side conversion circuit 101 is an inverter circuit, an alternating current side of the primary-side conversion circuit 101 is coupled to one side of the transformer 104, the secondary-side first conversion circuit 102 is a rectifier circuit, an alternating current side of the secondary-side first conversion circuit 102 is coupled to another side of the transformer 104, the secondary-side second conversion circuit 103 is a rectifier circuit, and an alternating current side of the secondary-side second conversion circuit 103 is coupled to still another side of the transformer 104. The primary-side conversion circuit 101 includes a plurality of first power switches, the secondary-side first conversion circuit 102 includes a plurality of second power switches, the secondary-side second conversion circuit 103 includes a first branch circuit, a second branch circuit, a third branch circuit, and a low-voltage output end that are connected in parallel, the first branch circuit includes a third power switch, a fourth power switch, and a first winding that are connected in series, the third power switch and the fourth power switch are opposite power transistors, the second branch circuit includes a fifth power switch, a sixth power switch, and a second winding that are connected in series, the fifth power switch and the sixth power switch are opposite power transistors, the third branch circuit includes a resonant inductor and a resonant capacitor that are connected in series, the low-voltage output end is connected in parallel to the resonant capacitor, and the first winding and the second winding are coupled on the still another side of the transformer 104. The controller 105 is configured to control each power switch included in the dual-output-port charging circuit, to control a first power supply path and a second power supply path to output electric energy, where the first power supply path includes the primary-side conversion circuit 101 and the secondary-side first conversion circuit 102, and the second power supply path includes the primary-side conversion circuit 101 and the secondary-side second conversion circuit 103.

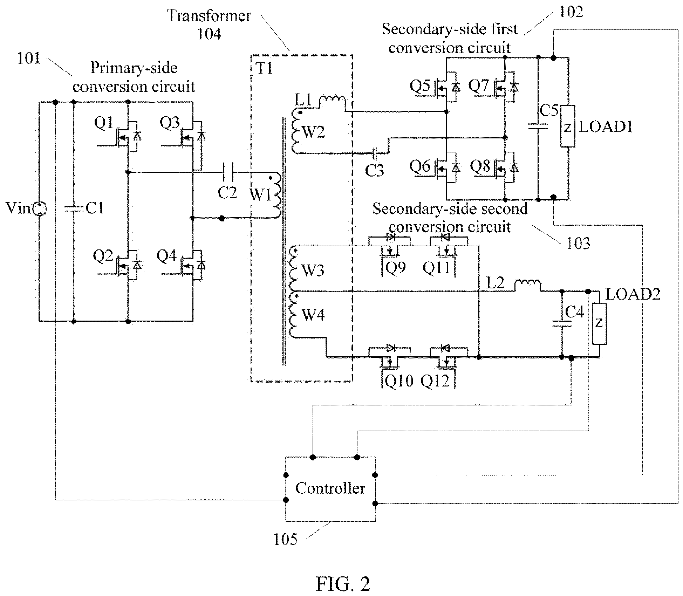

The dual-output-port charging circuit in this embodiment of this application is specifically described below. For details, refer to FIG. 2. The dual-output-port charging circuit is specifically as follows: The primary-side conversion circuit 101 includes Q1, Q2, Q3, and Q4 (that is, the first power switches), a capacitor C1, a direct current blocking capacitor C2, a winding W1, and an input voltage Vin. Q1 and Q2 form a first bridge arm, Q3 and Q4 form a second bridge arm, the first bridge arm, the second bridge arm, and the capacitor C1 are connected in parallel to the input voltage Vin, the winding W1 and the direct current blocking capacitor C2 are connected in series to form a branch circuit, one end of the branch circuit is connected between Q1 and Q2, and the other end is connected between Q3 and Q4. The secondary-side first conversion circuit 102 includes Q5, Q6, Q7, and Q8 (that is, the second power switches), a capacitor C5, a direct current blocking capacitor C3, a winding W2, a high-voltage output end LOAD1, and an auxiliary inductor L1. Q5 and Q6 form a third bridge arm, and the third bridge arm is connected in parallel to the high-voltage output end LOAD1. The winding W2, the auxiliary inductor L1, and the direct current blocking capacitor C3 are connected in series to form a branch circuit, one end of the branch circuit is connected between Q5 and Q6, and the other end is connected between Q7 and Q8. The secondary-side second conversion circuit 103 includes Q9 (that is, the third power switch), Q11 (that is, the fourth power switch), Q10 (that is, the fifth power switch), Q12 (that is, the sixth power switch), a resonant inductor L2, a resonant capacitor C4, a first winding W3, a second winding W4, and a low-voltage output end LOAD2. Q9, Q11, and the first winding W3 are connected in series to form the first branch circuit, and Q9 and Q11 are opposite power transistors. Q10, Q12, and the second winding W4 are connected in series to form the second branch circuit, and Q10 and Q12 are opposite power transistors. The resonant inductor L2 and the resonant capacitor C4 that are connected in series are the third branch circuit. The first branch circuit, the second branch circuit, and the third branch circuit are connected in parallel. The low-voltage output end LOAD2 is connected in parallel to the resonant capacitor C4. The winding W1 is coupled to one side of a transformer T1, and the winding W2, the winding W3, and the winding W4 are coupled to the other side of the transformer T1.

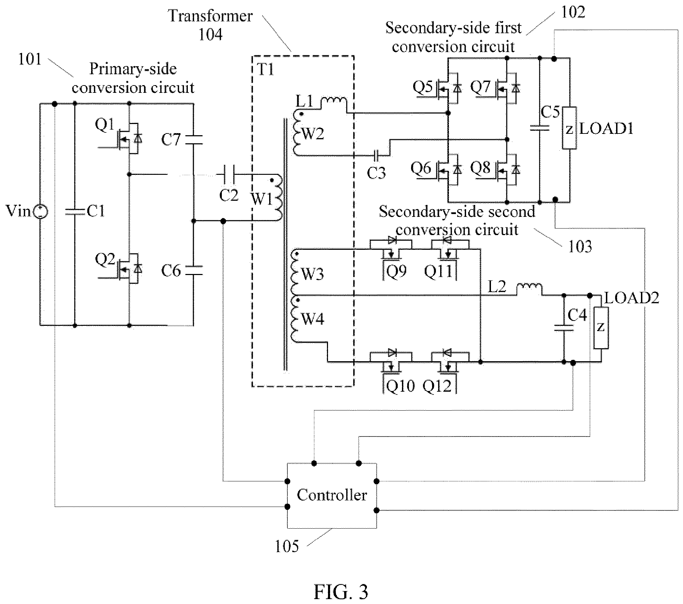

Optionally, because the primary-side conversion circuit and the secondary-side first conversion circuit may alternatively be half-bridge circuits, an example solution of the dual-output-port charging circuit may alternatively be shown in FIG. 3. A specific structure of the dual-output-port charging circuit is not described herein again.

Based on the circuit shown in FIG. 2, a working principle of the circuit is described below by using three working paths.

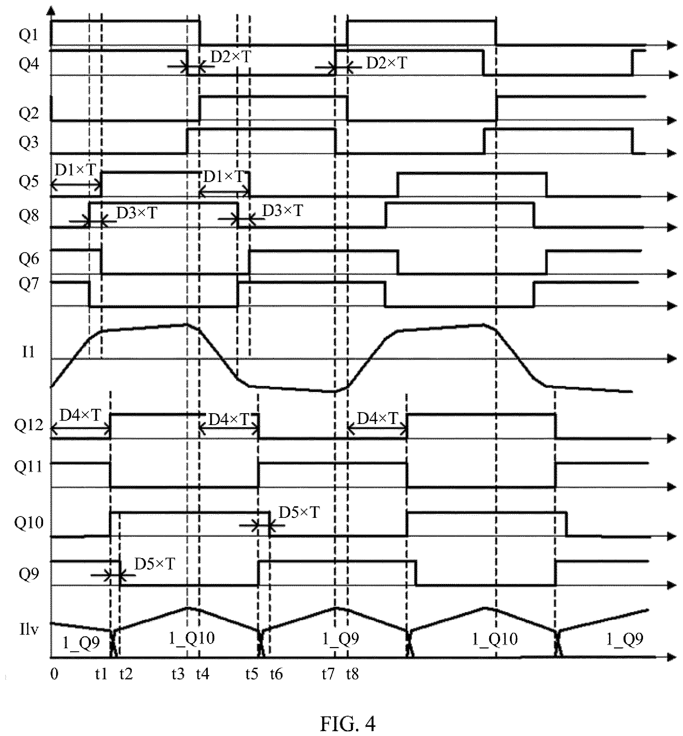

1. When the primary-side conversion circuit charges the secondary-side first conversion circuit, an example waveform sequence diagram of the primary-side conversion circuit is shown in FIG. 4.

It can be learned from the waveform sequence diagram shown in FIG. 4 that, an on/off state of Q1 is opposite to an on/off state of Q2, an on/off state of Q3 is opposite to an on/off state of Q4, an on/off state of Q5 is opposite to an on/off state of Q6, an on/off state of Q7 is opposite to an on/off state of Q8, Q1 is switched on or switched off later than Q4, Q2 is switched on or switched off later than Q3, Q5 is switched on or switched off later than Q8, and Q6 is switched on or switched off later than Q7. It can be learned from the waveform sequence diagram shown in FIG. 4 that, from 0 to t8, the primary-side conversion circuit implements one cycle of charging for the secondary-side first conversion circuit. A phase shift angle (D1 in FIG. 4) between Q5 and Q1, a phase shift angle (D3 in FIG. 4) between Q6 and Q7, a phase shift angle (D3 in FIG. 4) between Q5 and Q8, a phase shift angle (D2 in FIG. 4) between Q1 and Q4, and a phase shift angle (D2 in FIG. 4) between Q2 and Q3 cooperate with each other to control a voltage output situation between the primary-side conversion circuit and the secondary-side second conversion circuit, to control an inductance current on the secondary-side second conversion circuit. When the voltage output situation between the primary-side conversion circuit and the secondary-side second conversion circuit is that one of the primary-side conversion circuit and the secondary-side second conversion circuit outputs a positive voltage and the other outputs a negative voltage, a current slope of the inductance current on the secondary-side second conversion circuit is a first current slope. When the voltage output situation between the primary-side conversion circuit and the secondary-side second conversion circuit is that one of the primary-side conversion circuit and the secondary-side second conversion circuit outputs a positive voltage and the other outputs 0 or one outputs a negative voltage and the other outputs 0, a current slope of the inductance current on the secondary-side second conversion circuit is a second current slope. When the voltage output situation between the primary-side conversion circuit and the secondary-side second conversion circuit is that the primary-side conversion circuit and the secondary-side second conversion circuit each output a positive voltage or a negative voltage, a current slope of the inductance current on the secondary-side second conversion circuit is a third current slope. The first current slope is greater than the second current slope, and the second current slope is greater than the third current slope.

Optionally, in the technical solution provided in this example of this application, at least one of D2 and D3 may be 0. In this case, in the dual-output-port charging circuit, a charging process of the primary-side conversion circuit and the secondary-side first conversion circuit is mainly controlled based on D1. However, values of D1, D2, and D3 may be specifically calculated based on parameters of components in the dual-output-port charging circuit and a user requirement. Specifically, a relational expression between transmit power and all of D1, D2, and D3 is a (relationship expression 1), and a relational expression for an output voltage, namely, a (relationship expression 2), may be derived when output impedance LOAD1 is given.

$$P = f\,(\mathrm{Vin},\ V1,\ n1,\ f,\ L1,\ D1,\ D2,\ D3)\ (\text{relational expression 1})$$

$$V1 = f\,(\mathrm{Vin},\ \mathrm{LOAD1},\ n1,\ f,\ L1,\ D1,\ D2,\ D3)\ (\text{relational expression 2})$$

In a specific example, both D2 and D3 may be 0 or one of D2 and D3 is 0, and a corresponding expression (expression 3/4/5) for the transmit power may be derived by substituting D2 and D3 into the relational expression 1. This is merely a simple special case of a general control policy.

$$P = f\,(\mathrm{Vin},\ V1,\ n1,\ f,\ L,\ D1)\ (\text{relational expression 3})$$

$$P = f\,(\mathrm{Vin},\ V1,\ n1,\ f,\ L,\ D1,\ D2)\ (\text{relational expression 4})$$

$$P = f\,(\mathrm{Vin},\ V1,\ n1,\ f,\ L,\ D1,\ D3)\ (\text{relational expression 5})$$

P is the transmit power, f is a switching frequency, Vin is an input voltage of the primary-side conversion circuit, V1 is an output voltage of the secondary-side first conversion circuit, and n1 is a turn ratio of the winding W1 to the winding W2.

It may be understood that a control policy for supplying power to the primary-side conversion circuit by the secondary-side first conversion circuit is the same as a principle of charging the secondary-side first conversion circuit by the primary-side conversion circuit. Details are not described herein again.

2. When the primary-side conversion circuit charges the secondary-side second conversion circuit, an example waveform sequence diagram of the primary-side conversion circuit is shown in FIG. 4.

It can be learned from the waveform sequence diagram shown in FIG. 4 that, an on/off state of Q1 is opposite to an on/off state of Q2, an on/off state of Q3 is opposite to an on/off state of Q4, an on/off state of Q10 is the same as an on/off state of Q12, an on/off state of Q11 is opposite to the on/off state of Q10, Q1 is switched on or switched off later than Q4, Q2 is switched on or switched off later than Q3, and Q9 is switched on or switched off later than Q11. At a moment t1, Q10 and Q12 are triggered to be switched on, and the winding W4, the resonant inductor L2, the resonant capacitor C4, Q12, and Q10 form a path. Then, within a time period from t1 to t3, the winding W4 charges the low-voltage output end LOAD2, so that a current flowing through Q10 increases. Within a time period from t3 to t4, an output voltage of the winding W4 is 0, and within a time period from t4 to t5, an output voltage of the winding W4 is negative. In the two time periods, a current passing through the resonant inductor L2 still freewheels through the path including the winding W4, the resonant inductor L2, the resonant capacitor C4, Q12, and Q10, and therefore the current flowing through Q10 decreases. At a moment t5, Q12 is switched off and Q11 is switched on. In this case, an output voltage of the winding W3 is positive, and a current on a leakage inductor of the winding W4 rapidly decreases to 0. A current on the resonant inductor L2 freewheels after passing through a path including the winding W3, the resonant inductor L2, the resonant capacitor C4, Q9, and Q11. In this way, a current conversion process shown in FIG. 4 is implemented. It may be understood that because there are leakage inductors on the winding W3 and the winding W4, there is a delay during current transfer. Q12 is switched off based on a zero-voltage switch (Zero Voltage Switch, ZVS), and Q11 is switched on with a small current, so that a switching loss is reduced. Before a moment t6, a current on the winding W4 has decreased to 0. Because Q12 is switched off and has a backstop function, the current on the winding W4 keeps 0 and does not reversely increase. At the moment t6, soft switching-off based on a zero-current switch (Zero Current Switch, ZCS) is implemented when Q10 is switched off. Specifically, an expression for the output voltage of the secondary-side second conversion circuit may be calculated, that is, a (relational expression 6). D5 does not participate in power control, and is merely used to implement soft switching-off. In an actual application process, Q11 and Q12 may be driven by using a self-driving chip, and this does not affect a working principle.

$$V2 = f\ (Vin, n2, D2, D4)\ (\text{relational expression 6})$$

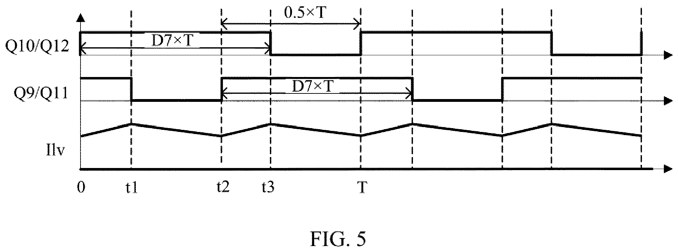

3. When the secondary-side second conversion circuit charges the primary-side conversion circuit, an example waveform sequence diagram of the secondary-side second conversion circuit is shown in FIG. 5.

In a time period from 0 to t1, Q9, Q10, Q11, and Q12 are all switched on. In this case, it is equivalent to short circuits on the first winding W3 and the second winding W4, and the low-voltage output end LOAD2 charges the resonant inductor L2 and stores energy for the resonant inductor L2.

At a moment t1, Q9 and Q11 are switched off. In this case, Q10 and Q12 still keep on. In this case, energy stored in the resonant inductor L2 starts to pass through the transformer T1 and charges the primary-side conversion circuit.

In a time period from t1 to t2, Q9 and Q11 keep off, and Q10 and Q12 keep on. In this case, the energy stored in the resonant inductor L2 continuously passes through the transformer T1 and charge the primary-side conversion circuit.

At a moment t2, Q9 and Q11 are switched on, and Q10 and Q12 still keep on. In this case, it is equivalent to short circuits on the first winding W3 and the second winding W4, and the low-voltage output end LOAD2 starts to charge the resonant inductor L2 and store energy for the resonant inductor L2 again.

In a time period from t2 to t3, Q9 and Q11 keep on, and Q10 and Q12 keep on. In this case, it is equivalent to short circuits on the first winding W3 and the second winding W4, and the low-voltage output end LOAD2 continuously charges the resonant inductor L2 and stores energy for the resonant inductor L2 again.

At a moment t3, Q9 and Q11 keep on, and Q10 and Q12 are switched off. In this case, the energy stored in the resonant inductor L2 starts to pass through the transformer T1 and charge the primary-side conversion circuit.

In a time period from t3 to T, Q9 and Q11 keep on, and Q10 and Q12 keep off. In this case, the energy stored in the resonant inductor L2 continuously passes through the transformer T1 and charges the primary-side conversion circuit.

It may be learned from the foregoing analysis that duration (D7 shown in FIG. 5) in which Q9 and Q11 keep on and duration (D7 shown in FIG. 5) in which Q9 and Q11 keep on control the secondary-side second conversion circuit to supply power to the primary-side conversion circuit. Specifically, D7 is controlled to control an output voltage and output power of the secondary-side second conversion circuit. A relationship expression such as a relational expression 7 may be derived.

$$Vin=f (V2, n2, D7) \text{ (relational expression 7)}$$

It may be understood that FIG. 5 describes only a control time sequence of supplying power to the primary-side conversion circuit by the secondary-side second conversion circuit, and a principle of supplying power to the secondary-side first conversion circuit by the secondary-side second conversion circuit is the same as this. Details are not described herein again.

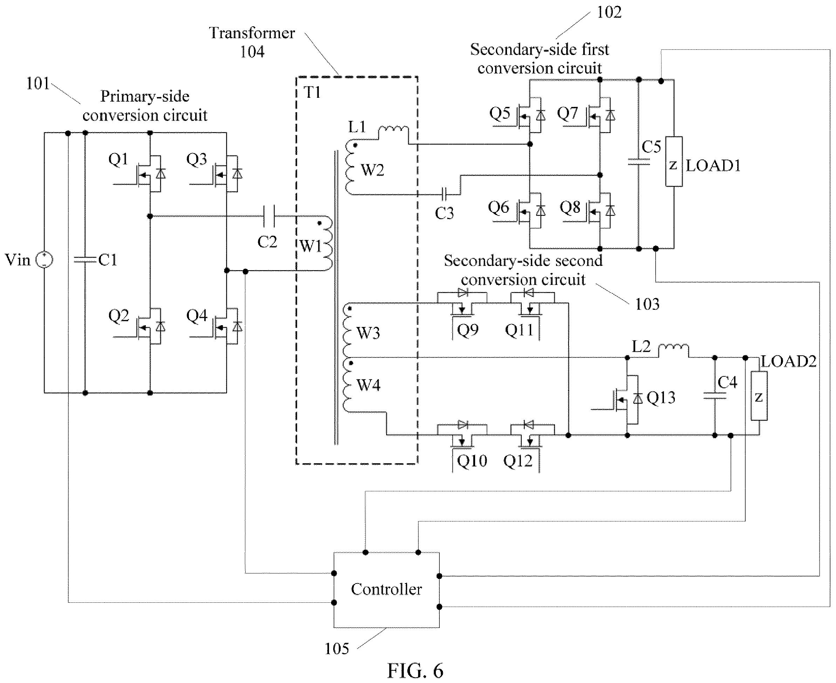

Optionally, FIG. 6 is a schematic diagram of a third structure of a dual-output-port charging circuit according to an example of this application. A difference from the foregoing structure shown in FIG. 2 lies in that a first free-wheeling diode Q13 connected in parallel to a resonant capacitor C4 is added to a secondary-side second conversion circuit 103 shown in FIG. 6. Control time sequences of forward charging and backward discharging of an OBC in this example are similar to the foregoing descriptions corresponding to FIG. 4, and details are not described herein again. Charging and discharging of the secondary-side second conversion circuit and a primary-side conversion circuit in the structure shown in FIG. 6 are specifically described below.

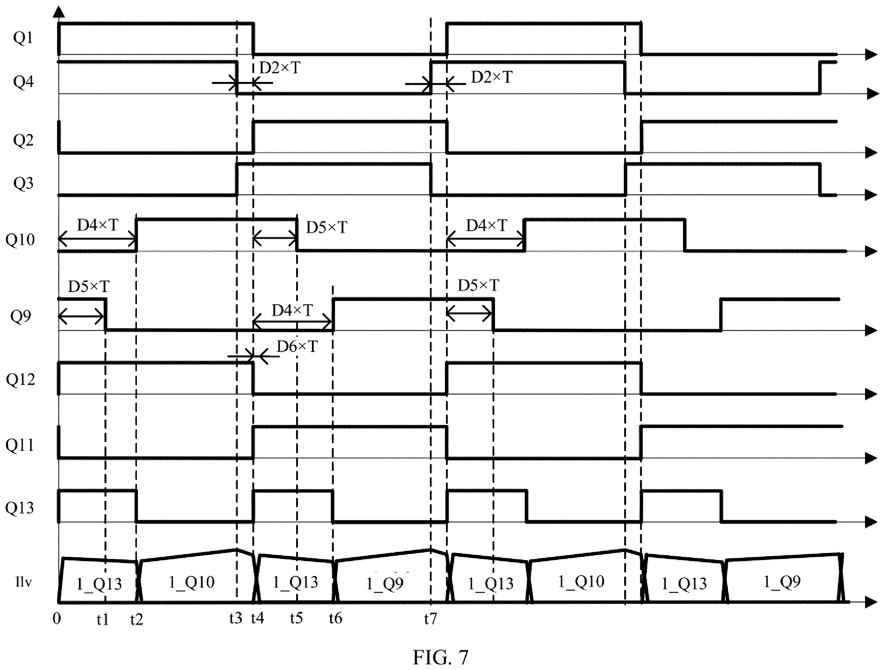

FIG. 7 is a diagram of another control time sequence of supplying power to the secondary-side second conversion circuit by the primary-side conversion circuit according to an example of this application. A specific working mode is as follows:

1. In a time period from 0 to t3, a winding W4 outputs a positive voltage, and a winding W3 outputs a negative voltage. At a moment t2, Q10 is triggered to be switched on, to form a path including W4, L2, C4, Q12, and Q10. The primary-side conversion circuit 101 supplies power to LOAD2 by using the winding W4. A current on Q10 increases, as shown by Ilv in FIG. 7. There is a leakage inductor on the winding W4, and there is a delay during current rise. Therefore, Q10 can be switched on with a small current, so that a switching loss is reduced. In this process, Q12 serves as a synchronous rectifier diode. Therefore, Q12 can be triggered to be switched on at a moment 0 or a moment t2. In the figure, Q12 is triggered to be switched on at the moment 0.

2. In a time period from t3 to t4, because Q1 and Q2 are reversed, output voltages of W3 and W4 are 0, and a current on the inductor L2 decreases. Because the first free-wheeling diode Q13 provides a flow path with smaller impedance, a smaller part of energy on the inductor L2 freewheels through the first free-wheeling diode Q13. Therefore, Q13 is triggered to be switched on at a moment t3, to reduce a conduction loss. Q13 can be switched on based on a ZVS.

3. In a time period from t4 to t6, the winding W4 outputs a negative voltage, and W3 outputs a positive voltage. At a moment t4, because an electrical input voltage changes to a negative voltage, a current on the winding W4 rapidly decreases, and the inductor L2 freewheels through Q13. In this case, the free-wheeling diode Q12 is switched off. Due to existence of the leakage inductor, Q12 can be switched off based on a ZVS. In this case, Q11 can be triggered to be switched on. However, because Q9 is switched off, a current does not pass through the winding W3, so that Q11 can be switched on based on a ZCS. At a moment t5, it is ensured that a current on the winding W4 is to be 0, and switching-off based on the ZCS can be implemented if Q10 is switched off.

4. At a moment t6, Q9 is triggered to be switched on, and the processes 1 to 3 are repeated on W3.

Actually, the foregoing steps 1 to 3 form a control mode of a BUCK circuit on W4, and a last half of the cycle forms a control mode of a BUCK circuit on W3. An output voltage and output power of the secondary-side second conversion circuit 103 may be controlled by adjusting D4, and D5 does not participate in power control. The following relational expression 8 may be derived.

$$V2=f (Vin, n2, D2, D4) \text{ (relational expression 8)}$$

Due to existence of leakage inductors on the windings W3 and W4, a current decreases at a specific slope in current transfer processes at the moments t2, t4, t6, and the like. Duration in which the current continuously decreases may be calculated based on a current at a transfer moment, as shown in the following relational expressions 9 and 10. To improve overall system efficiency, switching-off of Q11 and Q12 may be separately delayed by a time $D6\times T$, and switching-off of Q13 may be delayed by $D7\times T$, so that a conduction loss within a time of a switching-off process is reduced.

$$D6=f (Vin, n2, L2, Ioff, T) \text{ (relational expression 9)}$$

$$D7=f (Vin, n2, L2, Ion, T) \text{ (relational expression 10)}$$

In an actual application process, Q11, Q12, and Q13 may be driven by using a self-driving chip, and a working principle is consistent with that described in the time sequence diagram 7.

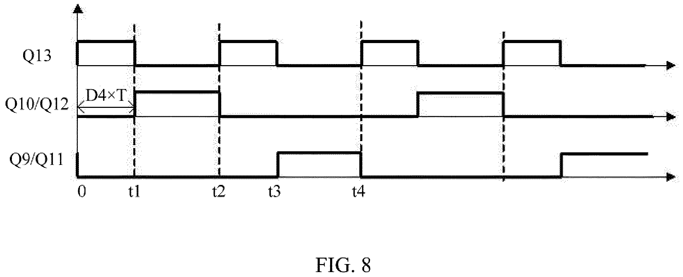

FIG. 8 is a diagram of another control time sequence of supplying power to the primary-side conversion circuit by the secondary-side second conversion circuit according to an example of this application. A specific working mode is as follows:

In a time period from 0 to t1, Q13 is triggered to be switched on, and the inductor L2 stores energy. At a moment t1, Q13 is switched off, and Q10 and Q12 are triggered to be switched on. Then, in a time period from t1 to t2, an inductance current freewheels through L2, W4, Q10, Q12, and C4 to charge the primary-side conversion circuit 101. At a moment t2, Q10 and Q12 are switched off, and Q13 is enabled to store energy again, and charges the primary-side conversion circuit 101 by using W3 at a moment t3. A control policy is equivalent to implementing BOOST conversion twice in one switching cycle. Power transmitted to the primary-side conversion circuit 101 is then allocated between the primary-side conversion circuit 101 and the secondary-side first conversion circuit 102 through time sequence control of forward charging and backward discharging of an OBC.

Optionally, the secondary-side second conversion circuit may further include a second free-wheeling diode, a third free-wheeling diode, and a second resonant capacitor. The third free-wheeling diode is connected in parallel to the resonant inductor and the second resonant capacitor. A difference between a waveform sequence diagram of the second free-wheeling diode, the fifth power switch, and the sixth power switch and a waveform sequence diagram of the third free-wheeling diode, the third power switch, and the fourth power switch is 180 degrees.

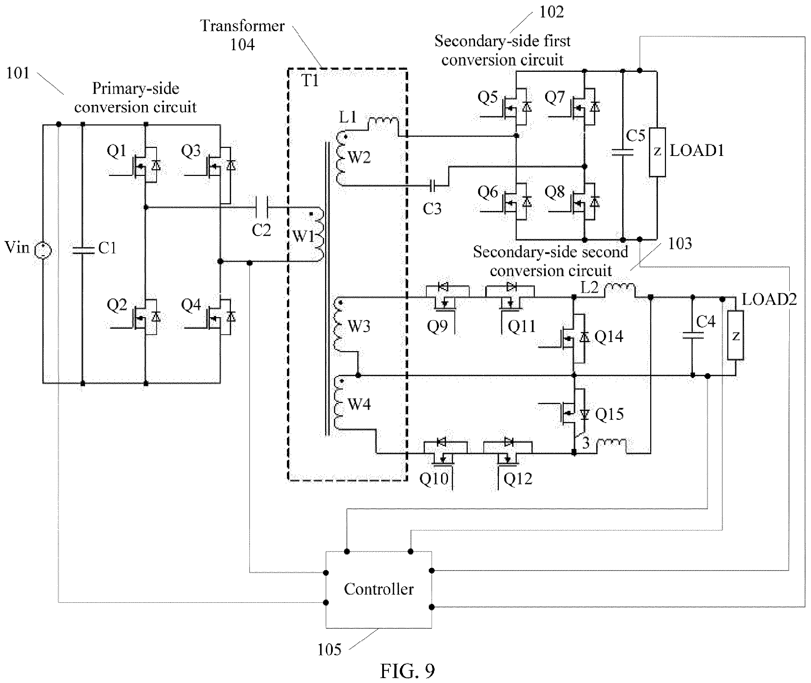

For a specific structure, refer to FIG. 9. The dual-output-port charging circuit is specifically as follows: The primary-side conversion circuit 101 includes Q1, Q2, Q3, and Q4 (that is, the first power switches), a capacitor C1, a direct current blocking capacitor C2, a winding W1, and an input voltage Vin. Q1 and Q2 form a first bridge arm, Q3 and Q4 form a second bridge arm, the first bridge arm, the second bridge arm, and the capacitor C1 are connected in parallel to the input voltage Vin, the winding W1 and the direct current blocking capacitor C2 are connected in series to form a branch circuit, one end of the branch circuit is connected between Q1 and Q2, and the other end is connected between Q3 and Q4. The secondary-side first conversion circuit 102 includes Q5, Q6, Q7, and Q8 (that is, the second power switches), a capacitor C5, a direct current blocking capacitor C3, a winding W2, a high-voltage output end LOAD1, and an auxiliary inductor L1. Q5 and Q6 form a third bridge arm, and the third bridge arm is connected in parallel to the high-voltage output end LOAD1. The winding W2, the auxiliary inductor L1, and the direct current blocking capacitor C3 are connected in series to form a branch circuit, one end of the branch circuit is connected between Q5 and Q6, and the other end is connected between Q7 and Q8. The secondary-side second conversion circuit 103 includes Q9 (that is, the third power switch), Q11 (that is, the fourth power switch), Q10 (that is, the fifth power switch), Q12 (that is, the sixth power switch), a first resonant inductor L2, a second resonant inductor L3, a resonant capacitor C4, a first winding W3, a second winding W4, a low-voltage output end LOAD2, a second free-wheeling diode Q14, and a third free-wheeling diode Q15. Q9, Q11, the first winding W3, and the second free-wheeling diode Q14 are connected in series to form the first branch circuit, and Q9 and Q11 are opposite power transistors. Q10, Q12, the second winding W4, and the third free-wheeling diode Q15 are connected in series to form the second branch circuit, and Q10 and Q12 are opposite power transistors. The resonant inductor L2 and the resonant capacitor C4 that are connected in series are the third branch circuit. The first branch circuit, the second branch circuit, and the third branch circuit are connected in parallel. The low-voltage output end LOAD2 is connected in parallel to the resonant capacitor C4. The second free-wheeling diode Q14 is connected in parallel to the first resonant inductor L2 and the second resonant inductor L3, the third free-wheeling diode Q15 is connected in parallel to the first resonant inductor and the second resonant inductor, the winding W1 is coupled to one side of the transformer T1, and the winding W2, the winding W3, and the winding W4 are coupled to the other side of the transformer T1.

Control time sequences of forward charging and backward discharging of an OBC in this example are similar to the foregoing descriptions corresponding to FIG. 4, and details are not described herein again.

Power supply of the secondary-side second conversion circuit to the primary-side conversion circuit in the structure shown in FIG. 9 is specifically described below.

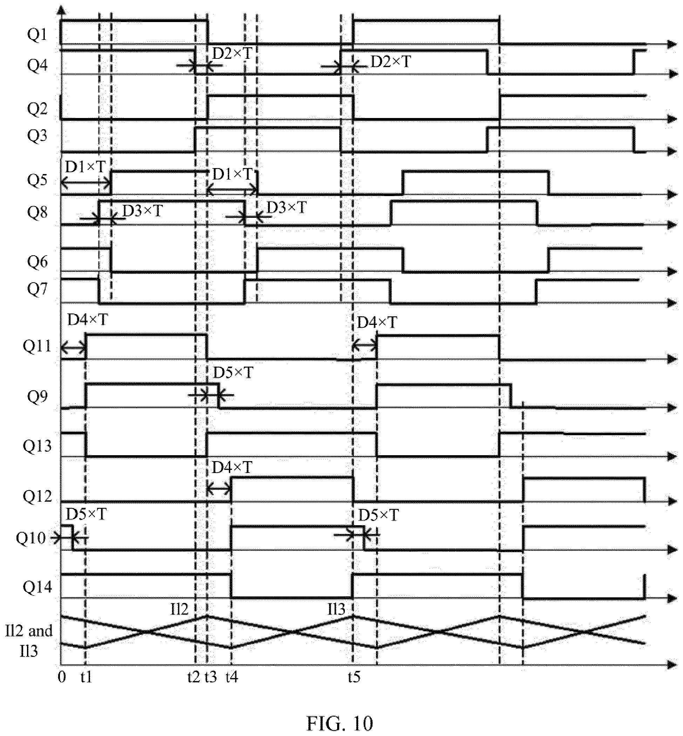

FIG. 10 is a diagram of another control time sequence of supplying power to the secondary-side second conversion circuit by the primary-side conversion circuit according to an example of this application. A specific working mode is as follows:

Waveform sequence diagrams of the primary-side conversion circuit and the secondary-side first conversion circuit are the same as those in the foregoing example. The secondary-side second conversion circuit is divided into two groups of power units: Q9, Q11, and Q14; and Q10, Q12, and Q15. A difference between waveform sequence diagrams of the two groups of units is 180 degrees. Herein, Q9, Q11, and Q14 are used as examples for description. In a time period from 0 to t2, the winding W3 outputs a positive voltage, and a backstop diode Q11 and a BUCK main diode Q9 are switched on at a moment t1; in a time period from t1 to t2, W3 outputs a positive voltage to charge the low-voltage output end LOAD2; in a time period from t2 to t3, a voltage output by the winding W3 is 0, and actually does not transfer energy, but a current still forwardly flows through Q9 and Q11; and in a time period from t3 to t4, W3 outputs a negative voltage, so that a current on the winding W3 rapidly decreases to 0, and then a current on the first resonant inductor L2 freewheels through Q14. At a moment t3, Q11 and Q1 are synchronously switched off. Then, the current on the winding W3 flows through a body diode of Q11. After the current is 0, Q11 may be switched off in time to prevent the current from reversing, and Q11 is switched off based on a ZVS. Because a leakage inductor on the winding W3 is quite small, the current on the winding decreases to 0 before a moment t4, and therefore, switching-off based on a ZCS can be implemented if Q9 is switched off at the moment t4. The free-wheeling diodes Q14 and Q11 are switched on in a complementary manner. Q14 freewheels through the body diode before being switched on and after being switched off. Therefore, switching-on and switching-off based on the ZVS are implemented. W3 outputs a negative voltage from t4 to t5, but the current still freewheels through a body of Q14 because the backstop diode Q11 is switched off.

In an actual implementation process, Q11, Q12, Q14, and Q15 can all be driven by a self-driving chip. Only Q9 and Q10 are controlled by using a DSP, and waveform sequence diagrams of Q9 and Q10 remain unchanged. This does not affect a working principle of the circuit.

It may be clearly understood by a person skilled in the art that, for convenient and brief description, for a detailed working process of the foregoing system, apparatus, and unit, refer to a corresponding process in the foregoing method embodiments/examples. Details are not described herein again.

In the embodiments/examples provided in this application, it should be understood that, the disclosed system, apparatus, and method may be implemented in other manners. For example, the described apparatus embodiment/example is merely an example. For example, unit into division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments/examples.

In addition, functional units in the embodiments/examples of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments/examples of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc

**Claims**

1. A dual-output-port charging circuit comprising a primary-side conversion circuit (101), a secondary-side first conversion circuit (102), a secondary-side second conversion circuit (103), a transformer (104), and a controller (105), wherein:

   • the primary-side conversion circuit (101) is an inverter circuit, an alternating current side of the primary-side conversion circuit (101) is coupled to one side of the transformer (T1), the secondary-side first conversion circuit (102) is a rectifier circuit, an alternating current side of the secondary-side first conversion circuit (102) is coupled to another side of the transformer (T1), the secondary-side second conversion circuit (103) is a rectifier circuit, and an alternating current side of the secondary-side second conversion circuit (103) is coupled to still another side of the transformer (T1);
   • the primary-side conversion circuit (101) comprises a plurality of first power switches (Q1 - Q4), the secondary-side first conversion circuit comprises a plurality of second power switches (Q5 - Q8), the secondary-side second conversion circuit (Q9 - Q12) comprises a first branch circuit, a second branch circuit, a third branch circuit, and a low-voltage output end that are connected in parallel, the first branch circuit comprises a third power switch (Q9), a fourth power switch (Q11), and a first winding (W3) that are connected in series, the third power switch (Q9) and the fourth power switch (Q11) are opposite power transistors, the second branch circuit comprises a fifth power switch (Q10), a sixth power switch (Q12), and a second winding (W4) that are connected in series, the fifth power switch (Q 10) and the sixth power switch (Q12) are opposite power transistors, the third branch circuit comprises a resonant inductor (L2) and a resonant capacitor (C4) that are connected in series, the low-voltage output end is connected in parallel to the resonant capacitor (C4), and the first winding (W3) and the second winding (W4) are coupled to the still another side of the transformer (T1); and

• the controller (105) is configured to control each power switch comprised in the dual-output-port charging circuit, to control a first power supply path, a second power supply path, and a third power supply path to output electric energy, the first power supply path comprises the primary-side conversion circuit (101) and the secondary-side first conversion circuit (102), the second power supply path comprises the primary-side conversion circuit (101) and the secondary-side second conversion circuit (103), and the third power supply path comprises the secondary-side first conversion circuit (102) and the secondary-side second conversion circuit (103),

**characterized in that**

• the controller (105) is specifically configured to:

◦ control, at a first moment, to switch on the third power switch (Q9) and the fourth power switch (Q11), wherein in a first time period, a voltage on the second winding (W4) is a positive voltage, a voltage on the first winding (W3) is a negative voltage, the second winding (W4), the resonant inductor (L2), the resonant capacitor (C4), the third power switch (Q9), and the fourth power switch (Q11) form a closed loop, the first moment is a moment in the first time period, and in a second time period, a voltage on the second winding (W4) is 0;

◦ control, at a second moment, to switch off the third power switch (Q9) based on a zero-voltage switch, ZVS, and to switch on the fifth power switch (Q10) based on a small current switching-on method, wherein in a third time period, a voltage on the second winding (W4) is a negative voltage, a voltage on the first winding (W3) is a positive voltage, and the second moment is an end moment of the third time period; and

◦ control, at a third moment, to perform soft switching-off on the fourth power switch (Q11) based on the zero-voltage switch, ZVS, wherein the third moment is a moment after the second moment, and in a fourth time period, a voltage on the first winding (W3) is a positive voltage, and the first winding (W3), the resonant inductor (L2), the resonant capacitor (C4), the fifth power switch (Q10), and the sixth power switch (Q12) form a closed loop.

2. The circuit according to claim 1, wherein the controller is configured to control a magnitude of a phase shift angle formed by on/off of the first power switches (Q1-Q4) and the second power switches (Q5 - Q8), to control a magnitude of electric energy output by the first power supply path and a current flow direction, and the current flow direction is output from an output end of the secondary-side first conversion circuit (102).

3. The circuit according to anyone of the preceding claims, wherein the controller is configured to control a magnitude of a phase shift angle formed by on/off of the first power switches (Q1 - Q4) and a target power switch, to control a magnitude of electric energy output by the second power supply path and a current flow direction, and the target power switch comprises at least one of the third power switch (Q9), the fourth power switch (Q11), the fifth power switch (Q10), and the sixth power switch (Q12).

4. The circuit according to claim 1, wherein the controller is configured to control a magnitude of a phase shift angle formed when a target power switch keeps on, to control the magnitude of the electric energy output by the second power supply path and the current flow direction, the target power switch is the third power switch (Q9) and the fourth power switch (Q11), or the target power switch is the fifth power switch (Q10) and the sixth power switch (Q12), and the current flow direction is output from an output end of the primary-side conversion circuit (101).

5. The circuit according to any one of the preceding claims, wherein the circuit further comprises an auxiliary inductor (L1), and the auxiliary inductor (L1) is connected to a winding on the alternating current side of the secondary-side first conversion circuit (102), or the auxiliary inductor (L1) is connected to a winding on the alternating current side of the primary-side conversion circuit (101).

6. The circuit according to claim 5, wherein when the auxiliary inductor (L1) is connected to the winding on the alternating current side of the secondary-side first conversion circuit (102), a voltage at a right end point of the auxiliary inductor (L1) is less than o, and the controller is configured to control the magnitude of the phase shift angle formed by on/off of the first power switches (Q1 - Q4) and the second power switches (Q5 - Q8), to control the magnitude of the electric energy output by the first power supply path and the current flow direction, wherein the current flow direction is output from the secondary-side first conversion circuit (102) to the output end of the primary-side conversion circuit (101).

7. The circuit according to claim 5, wherein when the auxiliary inductor (L1) is connected to the winding on the alternating current side of the primary-side conversion circuit (101), a voltage at a left end point of the auxiliary inductor (L1) is less than o, and the controller is configured to control the magnitude of the phase shift angle formed by on/off of the first power switches (Q1 - Q4) and the second power switches (Q5 - Q8), to control the magnitude of the electric energy output by the first power supply path and the current flow direction, wherein the current flow direction is output from the secondary-side first conversion circuit (102) to the output end of the primary-side conversion circuit (101).

8. The circuit according to any one of claims 1 to 7, wherein the primary-side conversion circuit (101) is a full-bridge circuit or a half-bridge circuit; and the secondary-side first conversion circuit (102) is a full-bridge circuit or a half-bridge circuit.

**Patentansprüche**

1. Ladeschaltung mit einem doppelten Ausgangsanschluss, die eine primärseitige Umsetzungsschaltung (101), eine sekundärseitige erste Umsetzungsschaltung (102), eine sekundärseitige zweite Umsetzungsschaltung (103), einen Transformator (104) und eine Steuereinheit (105) umfasst, wobei:

die primärseitige Umsetzungsschaltung (101) eine Wechselrichterschaltung ist, eine Wechselstromseite der primärseitigen Umsetzungsschaltung (101) an eine Seite des Transformators (T1) gekoppelt ist, die sekundärseitige erste Umsetzungsschaltung (102) eine Gleichrichterschaltung ist, eine Wechselstromseite der sekundärseitigen ersten Umsetzungsschaltung (102) an eine andere Seite des Transformators (T1) gekoppelt ist, die sekundärseitige zweite Umsetzungsschaltung (103) eine Gleichrichterschaltung ist und eine Wechselstromseite der sekundärseitigen zweiten Umsetzungsschaltung (103) an eine nochmals andere Seite des Transformators (T1) gekoppelt ist;
die primärseitige Umsetzungsschaltung (101) mehrere erste Leistungsschalter (Q1-Q4) umfasst, die sekundärseitige erste Umsetzungsschaltung mehrere zweite Leistungsschalter (Q5-Q8) umfasst, die sekundärseitige zweite Umsetzungsschaltung (Q9-Q12) eine erste Zweigschaltung, eine zweite Zweigschaltung, eine dritte Zweigschaltung und ein Niederspannungsausgangsende umfasst, die parallel geschaltet sind, die erste Zweigschaltung einen dritten Leistungsschalter (Q9), einen vierten Leistungsschalter (Q11) und eine erste Wicklung (W3) umfasst, die in Reihe geschaltet sind, der dritte Leistungsschalter (Q9) und der vierte Leistungsschalter (Q11) Leistungstransistoren gegenüberliegen, die zweite Zweigschaltung einen fünften Leistungsschalter (Q10), einen sechsten Leistungsschalter (Q12) und eine zweite Wicklung (W4) umfasst, die in Reihe geschaltet sind, der fünfte Leistungsschalter (Q10) und der sechste Leistungsschalter (W12) Leistungstransistoren gegenüberliegen, die dritte Zweigschaltung einen Resonanzinduktor (L2) und einen Resonanzkondensator (C4) umfasst, die in Reihe geschaltet sind, das Niederspannungsausgangsende parallel zu dem Resonanzkondensator (C4) angeschlossen ist und die erste Wicklung (W3) und die zweite Wicklung (W4) an die noch andere Seite des Transformators (T1) gekoppelt sind; und
die Steuereinheit (105) konfiguriert ist, jeden Leistungsschalter, der in der Ladeschaltung mit doppeltem Ausgangsanschluss enthalten ist, zu steuern, um einen ersten Stromversorgungsweg, einen zweiten Stromversorgungsweg und einen dritten Stromversorgungsweg zu steuern, elektrische Energie auszugeben, wobei der erste Stromversorgungsweg die primärseitige Umsetzungsschaltung (101) und die sekundärseitige erste Umsetzungsschaltung (102) umfasst, der zweite Stromversorgungsweg die primärseitige Umsetzungsschaltung (101) und die sekundärseitige zweite Umsetzungsschaltung (103) umfasst und der dritte Stromversorgungsweg die sekundärseitige erste Umsetzungsschaltung (102) und die sekundärseitige zweite Umsetzungsschaltung (103) umfasst,
**dadurch gekennzeichnet, dass**
die Steuereinheit (105) speziell konfiguriert ist zum:

Steuern in einem ersten Moment, den dritten Leistungsschalter (Q9) und den vierten Leistungsschalter (Q11) einzuschalten, wobei in einer ersten Zeitperiode eine Spannung auf der zweiten Wicklung (W4) eine positive Spannung ist, eine Spannung auf der ersten Wicklung (W3) eine negative Spannung ist, die zweite Wicklung (W4), der Resonanzinduktor (L2), der Resonanzkondensator (C4), der dritte Leistungsschalter (Q9) und der vierte Leistungsschalter (Q11) eine geschlossene Schleife bilden, der erste Moment ein Moment in der ersten Zeitperiode und in einer zweiten Zeitperiode ist, eine Spannung auf der zweiten Wicklung (W4) 0 ist;

Steuern in einem zweiten Moment, den dritten Leistungsschalter (Q9) anhand eines Nullspannungsschalters, ZVS, auszuschalten und den fünften Leistungsschalter (Q10) anhand eines Kleinstromeinschaltverfahrens einzuschalten, wobei in einer dritten Zeitperiode eine Spannung auf der zweiten Wicklung (W4) eine negative Spannung ist, eine Spannung auf der ersten Wicklung (W3) eine positive Spannung ist und der zweite Moment ein Endmoment der dritten Zeitperiode ist; und

Steuern in einem dritten Moment, ein sanftes Ausschalten an dem vierten Leistungsschalter (Q11) anhand des Nullspannungsschalters, ZVS, auszuführen, wobei der dritte Moment ein Moment nach dem zweiten Moment und in einer vierten Zeitperiode ist, eine Spannung auf der ersten Wicklung (W3) eine positive Spannung ist und die erste Wicklung (W3), der Resonanzinduktor (L2), der Resonanzkondensator (C4), der fünfte Leistungsschalter (Q10) und der sechste Leistungsschalter (Q12) eine geschlossene Schleife bilden.

2. Schaltung nach Anspruch 1, wobei die Steuereinheit konfiguriert ist, eine Größe eines Phasenverschiebungswinkels, der durch Ein/Aus der ersten Leistungsschalter (Q1-Q4) und der zweiten Leistungsschalter (Q5-Q8) gebildet wird, zu steuern, um eine Größe einer elektrischen Energie, die durch den ersten Stromversorgungsweg ausgegeben wird, und eine Stromflussrichtung zu steuern, und die Stromflussrichtung von einem Ausgangsende der sekundärseitigen ersten Umsetzungsschaltung (102) ausgegeben wird.

3. Schaltung nach einem der vorhergehenden Ansprüche, wobei die Steuereinheit konfiguriert ist, eine Größe eines Phasenverschiebungswinkels, der durch Ein/Aus der ersten Leistungsschalter (Q1-Q4) und eines Zielleistungsschalters gebildet wird, zu steuern, um einen Betrag an elektrischer Energie, die durch den zweiten Stromversorgungsweg ausgegeben wird, und eine Stromflussrichtung zu steuern, und der Zielleistungsschalter den dritten Leistungsschalter (Q9) und/oder den vierten Leistungsschalter (Q11) und/oder den fünften Leistungsschalter (Q10) und/oder den sechsten Leistungsschalter (Q12) umfasst.

4. Schaltung nach Anspruch 1, wobei die Steuereinheit konfiguriert ist, ein Größe eines Phasenverschiebungswinkels, der gebildet wird, wenn ein Zielleistungsschalter eingeschaltet bleibt, zu steuern, um die Größe der elektrischen Energie, die durch den zweiten Stromversorgungsweg ausgegeben wird, und die Stromflussrichtung zu steuern, wobei der Zielleistungsschalter der dritte Leistungsschalter (Q9) und der vierte Leistungsschalter (Q11) ist oder der Zielleistungsschalter der fünfte Leistungsschalter (Q10) und der sechste Leistungsschalter (Q12) ist und die Stromflussrichtung von einem Ausgangsende der primärseitigen Umsetzungsschaltung (101) ausgegeben wird.

5. Schaltung nach einem der vorhergehenden Ansprüche, wobei die Schaltung ferner einen Hilfsinduktor (L1) umfasst und der Hilfsinduktor (L1) mit einer Wicklung auf der Wechselstromseite der sekundärseitigen ersten Umsetzungsschaltung (102) verbunden ist oder der Hilfsinduktor (L1) mit einer Wicklung auf der Wechselstromseite der primärseitigen Umsetzungsschaltung (101) verbunden ist.

6. Schaltung nach Anspruch 5, wobei dann, wenn der Hilfsinduktor (L1) mit der Wicklung auf der Wechselstromseite der sekundärseitigen ersten Umsetzungsschaltung (102) verbunden ist, eine Spannung an einem rechten Endpunkt des Hilfsinduktors (L1) kleiner als 0 ist und die Steuereinheit konfiguriert ist, die Größe des Phasenverschiebungswinkels, der durch Ein/Aus der ersten Leistungsschalter (Q1-Q4) und der zweiten Leistungsschalter (Q5-Q8) gebildet wird, zu steuern, um die Größe der elektrischen Energie, die durch den ersten Stromversorgungsweg ausgegeben wird, und die Stromflussrichtung zu steuern, wobei die Stromflussrichtung von der sekundärseitigen ersten Umsetzungsschaltung (102) an das Ausgangsende der primärseitigen Umsetzungsschaltung (101) ausgegeben wird.

7. Schaltung nach Anspruch 5, wobei dann, wenn der Hilfsinduktor (L1) mit der Wicklung auf der Wechselstromseite der primärseitigen Umsetzungsschaltung (101) verbunden ist, eine Spannung an einem linken Endpunkt des Hilfsinduktors (L1) kleiner als 0 ist und die Steuereinheit konfiguriert ist, die Größe des Phasenverschiebungswinkels, der durch Ein/Aus der ersten Leistungsschalter (Q1-Q4) und der zweiten Leistungsschalter (Q5-Q8) gebildet wird, zu steuern, um die Größe der elektrischen Energie, die durch den ersten Stromversorgungsweg ausgegeben wird, und die Stromflussrichtung zu steuern, wobei die Stromflussrichtung von der sekundärseitigen ersten Umsetzungsschaltung (102) an das Ausgangsende der primärseitigen Umsetzungsschaltung (101) ausgegeben wird.

8. Schaltung nach einem der Ansprüche 1 bis 7, wobei die primärseitige Umsetzungsschaltung (101) eine Vollbrückenschaltung oder eine Halbbrückenschaltung ist; und die sekundärseitige erste Umsetzungsschaltung (102) eine Vollbrückenschaltung oder eine Halbbrückenschaltung ist.

**Revendications**

1. Circuit de charge à deux ports de sortie comprenant un circuit de conversion du côté primaire (101), un premier circuit de conversion du côté secondaire (102), un deuxième circuit de conversion du côté secondaire (103), un transformateur (104) et un contrôleur (105), dans lequel :

   - le circuit de conversion du côté primaire (101) est un circuit inverseur, un côté de courant alternatif du circuit de conversion du côté primaire (101) est couplé à un côté du transformateur (T1), le premier circuit de conversion du côté secondaire (102) est un circuit redresseur, un côté de courant alternatif du premier circuit de conversion du côté secondaire (102) est couplé à un autre côté du transformateur (T1), le deuxième circuit de conversion du côté secondaire (103) est un circuit redresseur, et un côté de courant alternatif du deuxième circuit de conversion du côté secondaire (103) est couplé à encore un autre côté du transformateur (T1) ;
   - le circuit de conversion du côté primaire (101) comprend une pluralité de premiers commutateurs de puissance (Q1 - Q4), le premier circuit de conversion du côté secondaire comprend une pluralité de deuxièmes commutateurs de puissance (Q5 - Q8), le deuxième circuit de conversion du côté secondaire (Q9 - Q12) comprend un premier circuit de dérivation, un deuxième circuit de dérivation, un troisième circuit de dérivation, et une extrémité de sortie basse tension qui sont connectés en parallèle, le premier circuit de dérivation comprend un troisième commutateur de puissance (Q9), un quatrième commutateur de puissance (Q11), et un premier enroulement (W3) qui sont connectés en série, le troisième commutateur de puissance (Q9) et le quatrième commutateur de puissance (Q11) sont des transistors de puissance opposés, le deuxième circuit de dérivation comprend un cinquième commutateur de puissance (Q10), un sixième commutateur de puissance (Q12) et un deuxième enroulement (W4) qui sont connectés en série, le cinquième commutateur de puissance (Q10) et le sixième commutateur de puissance (Q12) sont des transistors de puissance opposés, le troisième circuit de dérivation comprend une inductance résonante (L2) et un condensateur résonant (C4) qui sont connectés en série, l'extrémité de sortie basse tension est connectée en parallèle au condensateur résonant (C4), et le premier enroulement (W3) et le deuxième enroulement (W4) sont couplés à encore un autre côté du transformateur (T1) ; et
   - le contrôleur (105) est configuré pour commander chaque commutateur de puissance compris dans le circuit de charge à double port de sortie, pour commander un premier chemin d'alimentation, un deuxième chemin d'alimentation et un troisième chemin d'alimentation pour délivrer en sortie de l'énergie électrique, le premier chemin d'alimentation comprend le circuit de conversion du côté primaire (101) et le premier circuit de conversion du côté secondaire (102), le deuxième chemin d'alimentation électrique comprend le circuit de conversion du côté primaire (101) et le deuxième circuit de conversion du côté secondaire (103) et le troisième chemin d'alimentation électrique comprend le premier circuit de conversion du côté secondaire (102) et le deuxième circuit de conversion du côté secondaire (103),

   **caractérisé en ce que** :

   - le contrôleur (105) est spécifiquement configuré pour :

     ○ commander, à un premier moment, l'activation du troisième commutateur de puissance (Q9) et du quatrième commutateur de puissance (Q11) dans lequel, dans une première période de temps, une tension sur le deuxième enroulement (W4) est une tension positive, une tension sur le premier enroulement (W3) est une tension négative, le deuxième enroulement (W4), l'inducteur résonnant (L2), le condensateur résonnant (C4), le troisième commutateur de puissance (Q9) et le quatrième commutateur de puissance (Q11) forment une boucle fermée, le premier moment est un moment dans la première période de temps et, dans une deuxième période de temps, une tension sur le deuxième enroulement (W4) est 0 ;
     ○ commander, à un deuxième moment, la désactivation du troisième commutateur de puissance (Q9) sur la base d'un commutateur à tension nulle, ZVS, et l'activation du cinquième commutateur de puissance (Q10) sur la base d'un procédé d'activation à faible courant, dans lequel, dans une troisième période de temps, une tension sur le deuxième enroulement (W4) est une tension négative, une tension sur le premier enroulement (W3) est une tension positive, et le deuxième moment est un moment de fin de la troisième période de temps ; et
     ○ commander, à un troisième moment, une désactivation d'une commutation logicielle sur le quatrième commutateur de puissance (Q11) sur la base du commutateur de tension nulle, ZVS, dans lequel le troisième moment est un moment après le deuxième moment et, dans une quatrième période de temps, une tension sur le premier enroulement (W3) est une tension positive, et le premier enroulement (W3), l'inducteur résonnant (L2), le condensateur résonnant (C4), le cinquième commutateur de puissance (Q10) et le sixième commutateur de puissance (Q12) forment une boucle fermée.

2. Circuit selon la revendication 1, dans lequel le contrôleur est configuré pour contrôler l'importance d'un angle de déphasage formé par l'activation/la désactivation des premiers commutateurs de puissance (Q1 -Q4) et des deuxièmes commutateurs de puissance (Q5 - Q8), pour contrôler l'importance de la sortie d'énergie électrique par le premier chemin d'alimentation électrique et une direction de circulation de courant, et la direction de circulation de courant est sortie d'une extrémité de sortie du premier circuit de conversion du côté secondaire (102).

3. Circuit selon l'une quelconque des revendications précédentes, dans lequel le contrôleur est configuré pour contrôler l'importance d'un angle de déphasage formé par l'activation/la désactivation des premiers commutateurs de puissance (Q1 - Q4) et un commutateur de puissance cible, pour contrôler l'importance de la sortie d'énergie électrique par le deuxième chemin d'alimentation électrique et une direction de circulation de courant, et le commutateur de puissance cible comprend au moins l'un du troisième commutateur de puissance (Q9), du quatrième commutateur de puissance (Q11), du cinquième commutateur de puissance (Q10) et du sixième commutateur de puissance (Q12).

4. Circuit selon la revendication 1, dans lequel le contrôleur est configuré pour contrôler l'importance d'un angle de déphasage formé lorsqu'un commutateur de puissance cible reste activé, pour contrôler l'importance de la sortie d'énergie électrique par le deuxième chemin d'alimentation électrique et la direction de circulation du courant, le commutateur de puissance cible est le troisième commutateur de puissance (Q9) et le quatrième commutateur de puissance (Q11), ou le commutateur de puissance cible est le cinquième commutateur de puissance (Q10) et le sixième commutateur de puissance (Q12), et la direction de circulation du courant est sortie d'une extrémité de sortie du circuit de conversion du côté primaire (101).

5. Circuit selon l'une quelconque des revendications précédentes, dans lequel le circuit comprend en outre une inductance auxiliaire (L1), et l'inductance auxiliaire (L1) est connectée à un enroulement du côté du courant alternatif du premier circuit de conversion du côté secondaire (102), ou l'inductance auxiliaire (L1) est connectée à un enroulement du côté du courant alternatif du circuit de conversion du côté primaire (101).

6. Circuit selon la revendication 5, dans lequel, lorsque l'inducteur auxiliaire (L1) est connecté à l'enroulement du côté du courant alternatif du premier circuit de conversion du côté secondaire (102), une tension au niveau d'un point d'extrémité droit de l'inducteur auxiliaire (L1) est inférieure à 0, et le contrôleur est configuré pour contrôler l'importance de l'angle de déphasage formé par l'activation/la désactivation des premiers commutateurs de puissance (Q1 - Q4) et des deuxièmes commutateurs de puissance (Q5 - Q8), pour contrôler l'importance de l'énergie électrique délivrée en sortie par le premier chemin d'alimentation électrique et la direction de circulation du courant, dans lequel la direction de circulation du courant est sortie du premier circuit de conversion du côté secondaire (102) vers l'extrémité de sortie du circuit de conversion du côté primaire (101).

7. Circuit selon la revendication 5, dans lequel, lorsque l'inducteur auxiliaire (L1) est connecté à l'enroulement du côté du courant alternatif du circuit de conversion du côté primaire (101), une tension à un point d'extrémité gauche de l'inducteur auxiliaire (L1) est inférieure à 0, et le contrôleur est configuré pour contrôler l'importance de l'angle de déphasage formé par l'activation/la désactivation des premiers commutateurs de puissance (Q1 - Q4) et des deuxièmes commutateurs de puissance (Q5 - Q8), pour contrôler l'importance de l'énergie électrique délivrée en sortie par le premier chemin d'alimentation électrique et la direction de circulation du courant, dans lequel la direction de circulation du courant est sortie du premier circuit de conversion du côté secondaire (102) vers l'extrémité de sortie du circuit de conversion du côté primaire (101).

8. Circuit selon l'une quelconque des revendications 1 à 7, dans lequel le circuit de conversion du côté primaire (101) est un circuit en pont complet ou un circuit en demi-pont ; et le premier circuit de conversion du côté secondaire (102) est un circuit en pont complet ou un circuit en demi-pont.

FIG. 1

FIG. 2

**FIG. 3**

FIG. 4

FIG. 5

FIG. 6

FIG. 7

FIG. 8

FIG. 9

EP 3 971 019 B1

FIG. 10

**EP 3 971 019 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107623365 A
- CN 1315251 C
- EP 3533669 A1